Europäisches Patentamt

European Patent Office

Office européen des brevets

(19)

(11) Publication number: **0 122 350**
**A1**

# (12) EUROPEAN PATENT APPLICATION

(21) Application number: **83306870.3**

(22) Date of filing: **10.11.83**

(51) Int. Cl.³: **B 29 H 3/04**
**B 63 C 11/04**

(30) Priority: **12.11.82 GB 8232407**

(43) Date of publication of application:
**24.10.84 Bulletin 84/43**

(84) Designated Contracting States:
**DE FR IT**

(71) Applicant: **PRECISION DIPPINGS MARKETING LIMITED**
**Stover Trading Estate**
**Yate Bristol(GB)**

(72) Inventor: **Wynne-Jones, John Anthony**
**Lilliput Farmhouse Bowling Road**
**Chipping Sadbury(GB)**

(74) Representative: **Armitage, Ian Michael et al,**
**MEWBURN ELLIS & CO. 2/3 Cursitor Street**
**London EC4A 1BQ(GB)**

(54) Rubber attachments for diving suits.

(57) A cuff, collar or bootee for a dry (waterproof) diving suit is made by dipping a former 10 in rubber 14. Prior to dipping, a band 16 of heat sealable material is placed on the former 10, so that it becomes bonded integrally with the rubber. The rubber article can then be attached by heat sealing to a diving suit tailored from heat sealable material.

FIG. 1

Croydon Printing Company Ltd.

EP 0 122 350 A1

-1-

## RUBBER ATTACHMENTS FOR DIVING SUITS

This invention relates to the attachment of rubber articles to diving suits.

In recent years, dry (that is, waterproof) diving suits have been tailored from a waterproof material which comprises a polyurethane skin whose inner surface is provided with a nylon pile. The polyurethane acts as a barrier to water, but still allows air and water vapour to pass so that the fabric can "breathe". The nylon on the inner surface provides heat insulation and adds to the comfort of the suit. The material has some elastic properties. Such material is available under the trade mark AVILASTIC, from Norddeutsche Faserwerke GmbH.

Dry diving suits are tailored from this and various other materials by cutting out and securing together the various component pieces. The pieces are usually secured together firstly by rough cross-stitching, which acts to hold them together during the next stage which is to apply polyvinyl chloride (PVC) tape over the seams and then to heat seal the tape to the polyurethane. The heat sealing ensures that the seams are waterproof. Other sealing methods can also be used, such as high frequency welding without PVC tape, or even simply applying a self-adhesive tape over the seams. A waterproof suit will also require other attachments, including a waterproof zip fastener, and seals at the neck, wrists and ankles. Conventionally, these seals are made from rubber, and may be produced by a dipping process. The

-2-

seals are in the form of collars or cuffs, having one part which is attached to the rest of the suit and another part fits tightly around the wearer's neck, wrist or ankle in order to provide the waterproof seal. Another kind of rubber attachment would be a bootee, used in place of an ankle seal, which encloses the wearer's foot, and which again is attached to the leg of the diving suit.

The manufacturer of the diving suit obviously has to attach these rubber articles to the rest of the suit. At present, this is done by buffing the surface of the rubber so as to roughen it, cleaning it, applying a suitable solvent-based adhesive to the rubber article and to the part of the suit where it is to be attached, allowing the solvent to evaporate until it becomes tacky, and then sticking the rubber article to the suit by rolling it on and applying pressure. This is a laborious process, and naturally adds appreciably to the cost of the finished suit.

In one aspect, the present invention provides a method of making a rubber article for attachment to a diving suit, in which a former for the article is dipped into a bath of rubber, characterized in that a piece of a material which is more easily sealed than the rubber, e.g. a heat sealable material, is placed on the former and dipped into the rubber, so that the rubber article forms onto the sealable material, integral therewith. It is then possible to attach the rubber article to a diving suit made from sealable material, e.g. by a heat sealing process, and where the suit itself has seams formed by heat sealing it is possible

-3-

to attach the rubber articles as part of the same manufacturing step as making up the rest of the suit.

A second aspect of the invention provides a rubber article for attachment to a diving suit, in which there is a piece of a material which is more easily sealed than the rubber integrally attached to the rubber.

A third aspect of the invention provides a diving suit made from pieces of a        sealable material, sealed together, and having a rubber article as defined above or made by the above method secured thereto by sealing the piece of        sealable material integral with the rubber article to the rest of the suit.

Various ways of putting the invention into effect will be described by way of example, referring to the accompanying drawings, in which:

Fig. 1 shows diagramatically a first method of forming a rubber article,

Fig. 2 is a cross-section through part of such an article when formed,

Figs. 3 and 4 are side views of alternative types of such article, and

Fig. 5 illustrates a further method of forming a rubber article.

The preferred methods of manufacture described below use either coagulant dipping or heat-sensitive dipping. Both these processes are well known in the field of manufacture of rubber articles by dipping.

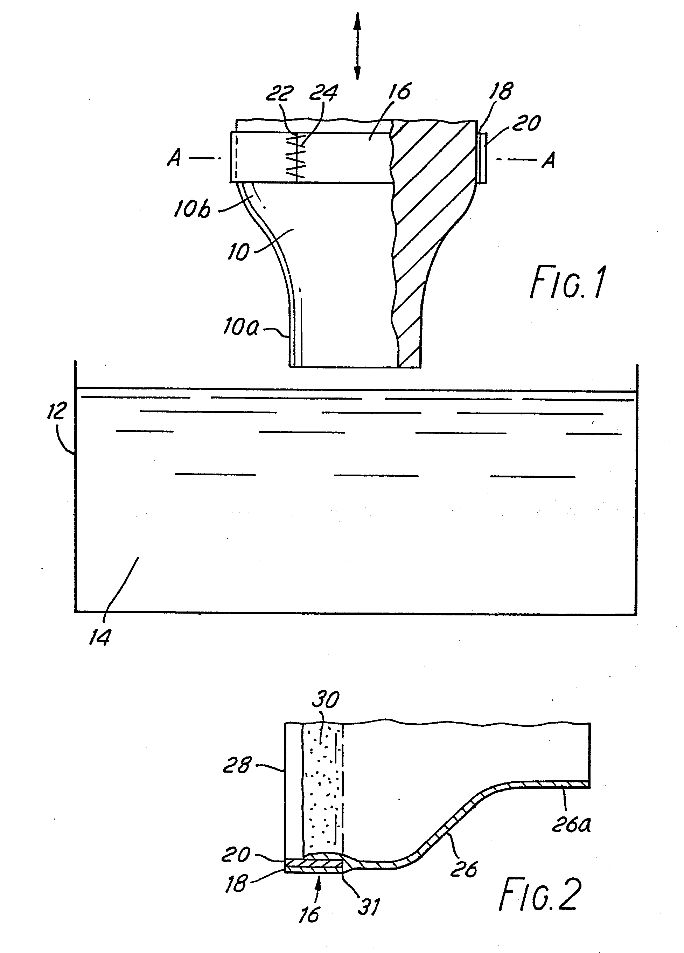

The first method uses coagulant dipping, and is illustrated in Fig. 1.

A former 10 is provided on a conventional jig for dipping into a bath 12 of latex 14. The former 10 is intended to produce a wrist or ankle cuff seal for a dry diving suit, and is circular in horizontal cross-section, and has a lower portion 10a which is of smaller diameter than an upper portion 10b. The surface of the former curves smoothly between these two portions.

The first stage of the method is to place a band of material 16 circumferentially about the upper portion 10b. The material 16 is the known heat-sealable AVILASTIC (trade mark) material, which comprises a polyurethane skin 18, and a nylon pile 20 bonded to the skin 18. As will be seen in Fig. 1, the band of material 16 is placed on the former 10 inside out, that is the polyurethane skin 18 is arranged innermost and the nylon pile 20 outermost. The band of material 16 is made from a simple strip of the AVILASTIC material, whose ends are seamed together at 22. This is done by cross-stitching 24. It would be possible, if desired, to finish off this seam by applying heat-sealable PVC tape over the seam, and heat sealing it to the material 16 to produce a watertight seam. However, it is possible to leave this heat sealing step for the manufacturer of the diving suit of which the rubber article is to form a part, since he will be performing

-5-

other heat sealing at that time.

Once the band of material 16 is in position on the portion 10b of the former, the former is dipped in the latex 14. It should be noted that this first dipping is performed without any coagulant on the former 10. The former is dipped in a bath up to the line A-A, approximately half way up the band of material 16. This partial overdipping of the fabric material 16 causes rubber to soak into the nylon pile 20, ensuring a good watertight bond with the fabric material 16. However, because there is no coagulant in the bath 12, rubber does not otherwise tend to coagulate on the former 10.

The next step is to dip the former 10 in a bath of a suitable coagulant for the latex. Then, the former is dipped again in the same or a different bath of latex, for a desired period of time so that the rubber coagulates onto the former 10 and onto the fabric band 16 (already impregnated with rubber) to a desired thickness.

After this step, the resulting rubber cuff 26 is removed from the former, and turned inside out. In the process, of course, this turns the band 16 the correct way out so that the polyurethane skin 18 is outermost, as seen in Fig. 2. The lower end of the rubber cuff (formed on the horizontal underside of the portion 10a) is trimmed off, to produce a finished cuff seal as shown in Fig. 2. If desired, the rubber can be

-6-

chlorinated to give the surface a slippier feel, and/or given other finishing treatments. The narrow portion 26a of the cuff, produced on the portion 10a of the former, will in the finished diving suit fit tightly in a waterproof manner about the wearer's wrist or ankle.

Such a cuff seal can then be sent directly to the manufacturer of the waterproof diving suit. He will make up the suit from the same AVILASTIC material as the band 16, in the usual manner, cross-stitching the tailored pieces of the suit, applying PVC heat sealable tape over them, and heat sealing the various pieces together in a watertight manner. At the same time, he will cross-stitch the free edge 28 of the band 16 to the ends of the sleeve of the diving suit (if the rubber article is a wrist seal) or to the leg of the suit (if the article is an ankle seal), apply PVC tape and heat seal the cuff to the suit in exactly the same manner. Thus, the attachment of the rubber article can be performed as part of the overall sealing process which the manufacturer already performs, greatly reducing the amount of labour required when compared with the existing methods of attachment of the rubber articles. At the same time as he is heat sealing all the other seams, the manufacturer of the suit can apply PVC tape over the seam 22 of the band 16, and heat seal that.

Because the band 16 was placed on the former 10 inside out, the rough texture where the rubber soaks into the nylon material occurs on the inside portion 30 of the band 16, and on the outside of the finished article there is a clean boundary 31 between the polyurethane skin 18 and the rubber 26. Thus, the region 30 provides a large bonding area between the rubber and the fabric material, while retaining a good, clean appearance on the outside.

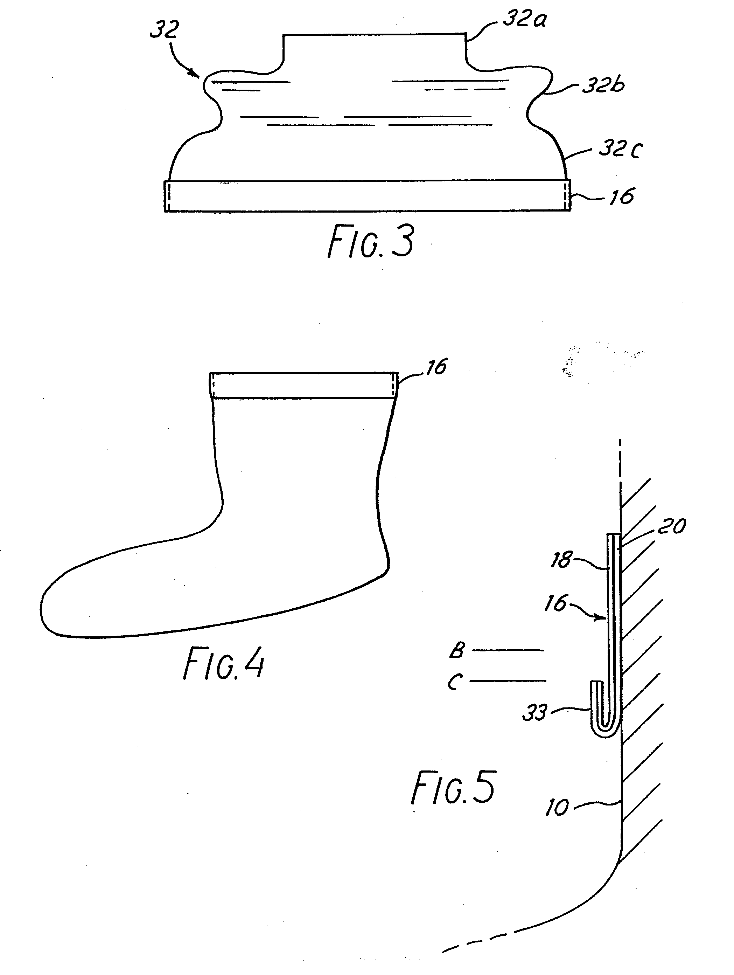

Fig. 3 shows a collar for providing a neck seal which has been manufactured in accordance with the above method. The rubber portion 32 of the article has a neck portion 32a which in use fits tightly around the diver's neck to prevent the ingress of water inside the suit. Below that, is a concertinaed bellows portion 32b, to give the wearer freedom of movement, and below that is a portion 32c of somewhat wider diameter, to which a band of material 16 has been attached. The method of forming this neck seal is exactly the same as the wrist or ankle seals described above, except of course that the former 10 must be of a shape corresponding to that which it is desired to produce in the rubber. The collar is easily removed from such a complicated former, because of the elasticity of the rubber 32. The collar is then subjected to the same trimming and finishing processes as described above. The fabric band 16 can be attached to a diving suit during its manufacture in exactly the same way as described above.

-8-

Fig. 4 shows a rubber bootee for attachment to a diver's suit. At the open end, this has a peripheral band of fabric 16. The bootee is formed in exactly the same manner as described above, except of course that in place of the former 10 a former is used which has the desired shape of the bootee. This can be a 3-dimensional solid shape, but it is somewhat easier to manufacture the bootee if the fomrer is simply a flat plate of the desired shape and size. Of course, the finished bootee then has a central fold line in the rubber at the top and bottom.

It is obviously possible to fashion rubber articles in any desired shape, with a band of fabric 16 (which for some sheet-like articles need not even be annular, but can just be a strip) and to produce the article by dipping with the band 16 placed on the former used.

It would be possible to leave out the first dipping step of the method of Fig. 1, in which no coagulant is used. However, we have found that to achieve success then requires careful adjustment of the composition of the coagulant in the latex, in order that it will coagulate satisfactorily on the former 10 and still adhere well to the fabric band 16. It is for this reason that we prefer to have a first dipping with no coagulant, to ensure that the rubber satisfactorily penetrates the fabric.

We will now describe a heat-sensitive method of production of articles as described above, in place of the coagulant method. The former 10 is placed in an oven so as to heat it up to the required elevated temperature, approximately 80°C. The band 16 of fabric is placed on the former (inside out as before) before it is placed in the oven. However, the fabric 16 naturally has a much lower thermal capacity than the metal former 10. Accordingly, the fabric does not retain any appreciable heat.

Next, the heated former is dipped into the bath 12 of latex 14. This time, the latex is modified by chemical agents which cause it to gel at the elevated temperature of the former. Thus, by dipping the former in the bath, the former picks up rubber to the required thickness. However, because the band 16 is much cooler (having retained no heat) the latex does not gel on contact but penetrates into the nylon pile. This ensures a good bonding between the fabric and the rubber, to produce an article with very similar properties to that produced by the method described above. The article is turned inside out as previously and trimmed as necessary, chlorinated, and given any other conventional treatments as desired.

Either of the above methods (that is, either the coagulant method or the heat-sensitive method) can be performed in the following alternative manner. Instead of the band 16 being applied to the former 10 inside out, that is with the polyurethane skin 18 inside and the nylon pile 20 outside, it can be applied the correct way round, that is with the polyurethane skin 18 outside. The methods described above are repeated, except that instead of dipping to the line A-A approximately half way up the band 16, the fabric is only overdipped very slightly. The latex does not tend to penetrate the skin 18 but will wick into the nylon pile layer 20 from the edge, between the skin 18 and the former. This gives the desired bonding between the fabric and the rubber. In the heat-sensitive method, of course, the rubber will not gel on the outer surface of the polyurethane skin, and since it does not penetrate into this skin either, there will be left a clean boundary between the polyurethane skin and the rubber (although there will still be the waterproof bonding with the nylon layer 20). In the coagulant method, both the initial dipping in rubber with no coagulant, the dipping in the coagulant bath, and the final dipping in rubber with the coagulant are conducted to a level over the edge of the fabrics band 16. This will produce a layer of rubber over the top of the polyurethane skin 18, but because the rubber does not penetrate to the skin 18 (but only into the nylon layer 20) this layer can be peeled back and trimmed at the boundary 31 between the polyurethane skin and the rubber.

Thus, all these methods produce bonding between

-11-

the rubber and the inner absorbent nylon pile layer, while giving a clean outer appearance at the boundary 32 between the polyurethane skin 18 and the rubber.

The advantage of the first two methods, where the fabric band is applied to the former inside out, is that it gives a large area of bonding between the rubber and the fabric. In the other methods, the area of bonding is limited to the amount by which the rubber wicks up inside the nylon pile layer between the outer polyurethane skin and the former, because there is no significant overdipping of the fabric; but this method has the advantage that the article is formed the correct way round on the former, not inside out. Thus, the inner and outer surfaces of the rubber are not placed under any different strain as happens when they are turned inside out, and they are a little more resistant to attack from, for example, ozone.

It will be appreciated that other materials can be used for the band 16 than the AVILASTIC material described. Such materials should of course be sealable to the diving suit, but it is not necessary for them to be heal sealable, or for them to have an absorbent layer such as the layer 20 which is particularly adapted to absorb the rubber during the dipping.

Materials which can be sealed more easily than rubber include GORE-TEX, a fabric produced by W.L. Gore and Associates, Pitreavie Industrial Estate, Dumfermline, Fife, Scotland. This has two outer layers of nylon,

0122350

between whichis sandwiched a polytetrafluororthylene
"breathable" layer. Simple nylon materials which have
been proofed with, e.g., neoprene polymer can also be
used. The material used is preferably but not
essentially the same as that from which the rest of the
suit is formed. In any case, the material should of
course be at least capable of being waterproofed when
fitted into the finished suit.

The absorbent layer 20 is not essential because the
fact that the fabric is being dipped during the
vulcanisation process will naturally tend to adhere the
fabric integrally with the rubber.

In place of the heat sealing, many other sealing
methods can be used - preferably of course the same
method the suit manufacturer uses when making up the suit.
High frequency welding is a possibility, as also is the
application of suitable self-adhesive tape over the seams
between the attachment and the suit. It will of course
be appreciated that this could not be done directly onto
the rubber of the attachment, since there would be severe
incompatibility problems, especially because the rubber
is more elastic than fabric materials.

We have found that the first two methods described
above, in which the rubber article is turned inside out,
is not always entirely satisfactory if the article is
relatively complex, e.g. the neck seal of Fig. 3. This
is because once turned inside out, the article may have an unacceptable appearance. An improved method for such articles in depicted in Fig. 5. An annular fabric band 16 is used which is somewhat deeper than previously, e.g. about 3 inches (8cm). It is placed on the former 10 with the polyurethane skin 18 outermost and the nylon pile 20 innermost. The lower edge is turned back on itself at 33, e.g. by about half an inch (1½ cm). The dipping method used is the coagulant method described above. The initial dipping with no coagulant is carried out to a line B above the top of the turned back portion 33. At this stage, some rubber soaks into the nylon pile of the turned back portion 33, but of course no coagulation takes place on the polyurethane skin 18. Next, the former 10 is dipped into a coagulant bath, up to the upper edge of the turned back portion (line C). The second, main dipping in rubber is also carried out up to the line C, and of course rubber now starts to coagulate on the turned back portion. This is allowed to happen for about 20 seconds. After this time, the former 10 is withdrawn partially from the bath of rubber, the turned over portion 33 is flipped back so as to lie against the former, and the former is returned fully into the bath until rubber has collected on it to the required thickness. In this way, a large area of bonding between the rubber and the nylon pile layer 20 can be obtained without having to turn the finished article inside out. If desired, the heat sensitive method could be adapted in a similar way.

-14-

CLAIMS:

1.    A method of making a rubber article for attachment to a diving suit, in which a former (10) for the article is dipped into a bath of rubber, characterised in that a piece (16) of a material which is more easily sealed than the rubber is placed on the former and dipped into the rubber, so that the rubber article forms onto the sealable material (16), integral therewith.

2.    A method according to claim 1 wherein the sealable material (16) comprises a waterproof layer (18) and a rubber-absorbing layer (20).

3.    A method according to claim 2 wherein the sealable material (16) is placed on the former with the waterproof layer (18) innermost and the rubber-absorbing layer (20) outermost, and the rubber article is subsequently turned inside out.

4.    A method according to claim 2 wherein the sealable material (16) is placed on the former with the waterproof layer (18) outermost and the rubber-absorbing layer (20) innermost.

5.    A method according to claim 4 wherein the lower edge (33) of the sealable material (16) is turned over itself prior to dipping.

6.    A method according to any one of the preceding claims wherein the sealable material (16) is heat sealable.

7.    A rubber article for attachment to a diving suit, in which there is a piece (16) of a material which is more easily sealed than the rubber integrally attached to the rubber.

8. An article according to claim 7 wherein the sealable material (16) comprises an outer waterproof layer (18) and an inner rubber-absorbing layer (20).

9. An article according to claim 7 or claim 8 wherein the piece of sealable material is an annular band (16).

10. A diving suit having attached thereto a rubber article according to any one of claims 7 to 9, or made by a method according to any one of claims 1 to 6.

11. A diving suit tailored from pieces of a sealable material, sealed together, and having a rubber article according to any one of claims 7 to 9, or made by a method according to any one of claims 1 to 6, of which said piece of sealable material (16) is sealed to the rest of the suit.

0122350

1/2

FIG.1

FIG.2

FIG.3

FIG.4

FIG.5

## EUROPEAN SEARCH REPORT

European Patent Office

| | DOCUMENTS CONSIDERED TO BE RELEVANT | | | EP 83306870.3 |
|---|---|---|---|---|
| Category | Citation of document with indication, where appropriate, of relevant passages | | Relevant to claim | CLASSIFICATION OF THE APPLICATION (Int. Cl. ³) |
| A | US - A - 2 747 229 (TEAGUE)<br>* Totality *<br>-- | | | B 29 H 3/04<br>B 63 C 11/04 |
| A | GB - A - 1 011 561 (MERCER)<br>* Totality *<br>-- | | | |
| A | US - A - 4 340 348 (KURTZ)<br>* Totality *<br>-- | | | |
| A | GB - A - 787 417 (U.S. RUBBER COMPANY)<br>* Totality *<br>-- | | | |
| A | US - A - 3 740 764 (ELFSTROM)<br>* Totality *<br>---- | | | TECHNICAL FIELDS SEARCHED (Int. Cl. ³)<br><br>B 29 C<br>B 29 H<br>B 63 C |

The present search report has been drawn up for all claims

| Place of search | Date of completion of the search | Examiner |
|---|---|---|
| VIENNA | 20-02-1984 | MAYER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82